# FASCICULE DE BREVET EUROPEEN

(11) **EP 3 388 808 B1**
(45) Date de publication et mention de la délivrance du brevet: **02.10.2019**
(21) Numéro de dépôt: 18175493.8
(22) Date de dépôt: 07.06.2016
(51) Int. Cl.: G01L 7/08, G01L 19/06, G01L 19/14

(54) **DISPOSITIF DE DETECTION DE PRESSION A DECOUPLAGE MECANIQUE**
DRUCKERFASSUNGSVORRICHTUNG MIT MECHANISCHER ENTKOPPELUNG
DEVICE FOR DETECTING PRESSURE WITH MECHANICAL UNCOUPLING

(30) Priorité: 12.06.2015 FR 1555411
(43) Date de publication de la demande: 17.10.2018
(62) Demande divisionnaire de: 16727508.0
(73) Titulaire: SAFRAN ELECTRONICS & DEFENSE, 92100 Boulogne Billancourt (FR)
(72) Inventeur: RIOU, Jean-Christophe, 92100 BOULOGNE-BILLANCOURT (FR); BAILLY, Eric, 92100 BOULOGNE-BILLANCOURT (FR)
(74) Mandataire: Prouvez, Julien

(56) Documents cités:
- WO-A1-95/34917
- US-A- 5 317 917

## Description

La présente invention concerne le domaine de la mesure de pression, plus particulièrement dans le domaine aéronautique.

### ETAT DE LA TECHNIQUE

Un dispositif de détection de pression comprend un bâti sur lequel est fixé un capteur de pression. Le capteur de pression comprend un substrat portant une première électrode et une membrane qui porte une deuxième électrode en regard de la première électrode. La membrane est soumise à la pression du fluide à mesurer et est susceptible de se déformer sous cette pression de telle manière que la distance entre les électrodes, mesurée selon un axe normal aux électrodes varie en fonction de la pression. Les deux électrodes soumises à une tension électrique forment donc un condensateur dont la capacité varie en fonction de la pression, la mesure de cette capacité permettant de déterminer la pression.

Il existe également des dispositifs comportant d'autres moyens de mesurer la déformation de la membrane comme par exemple des jauges de contrainte.

Un inconvénient de ces dispositifs dans leur ensemble est que leur précision dépend de la température et des variations de celles-ci.

En effet, la membrane et le substrat étant généralement dans des matériaux différents, les variations de température font naître dans le dispositif des dilatations différentielles qui engendrent des contraintes altérant la déformation de la membrane et faussant donc la mesure de la pression.

Les documents WO95/34917 et US5317917 décrivent des dispositifs de détection de pression.

### OBJET DE L'INVENTION

Un but de l'invention est de fournir un moyen pour améliorer la précision des capteurs.

### BREF EXPOSE DE L'INVENTION

A cet effet, on prévoit, selon l'invention,
un dispositif de détection de pression comprenant un bâti sur lequel est fixé un capteur de pression comprenant une membrane qui a une surface destinée à être soumise à un fluide sous pression et qui est agencée pour se déformer élastiquement en fonction de la pression, et des moyens de détermination de la déformation de la membrane selon un axe normal à un plan moyen de la membrane au repos. Selon l'invention, la membrane est portée par un cadre relié au bâti par une structure de découplage mécanique pour isoler la membrane de contrainte résultant d'une dilatation thermique différentielle entre le cadre et le bâti. La structure de découplage comporte une liaison du cadre au bâti sur un seul côté, la membrane et le cadre étant dans un même matériau, et la liaison est agencée pour que le cadre s'étende en porte-à-faux par rapport au bâti. Ce mode de découplage est particulièrement adapté à des éléments sensibles en silicium mais aussi en alliage de silicium (carbure de silicium, nitrure de silicium), en quartz (« silica fuse »), et en diamant. Cette structure reste facile à usiner par des méthodes mécaniques ou chimiques par voie humide ou sèche. Les déflexions liées au découplage sont localisées dans une partie très affinée de la liaison.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en coupe transversale d'un dispositif selon un premier mode de réalisation de l'invention ;
- la figure 2 est une vue de dessus d'un dispositif selon le premier mode de réalisation de l'invention ;
- la figure 3 est une vue de dessus d'un dispositif selon une variante du premier mode de réalisation de l'invention ;

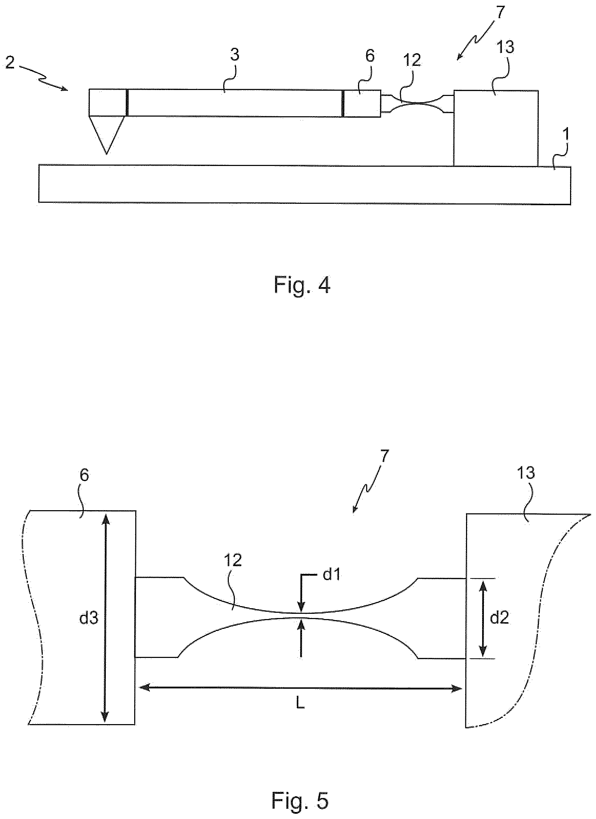

- la figure 4 est une vue schématique en coupe transversale d'un dispositif selon un deuxième mode de réalisation ;
- la figure 5 est une vue partielle de détail de la zone V de la figure 4.

### DESCRIPTION DETAILLEE DE L'INVENTION

En référence aux figures, le dispositif de détection de pression comprend un bâti 1 sur lequel est fixé un capteur de pression généralement désigné en 2. Le capteur de pression 2 comprend une membrane 3 qui a une surface 4 destinée à être soumise à un fluide sous pression et qui est agencée pour se déformer élastiquement en fonction de la pression. Le capteur de pression 2 comprend en outre des moyens de détermination de la déformation de la membrane 3 selon un axe 5 normal à un plan moyen de la membrane 3 au repos.

Selon l'invention, la membrane 3 est portée par un cadre 6 en un même matériau que la membrane 3. Le cadre 6 est porté par une structure de découplage mécanique, généralement désignée en 7, reliée au bâti 1 et agencée pour isoler la membrane 3 de contrainte résultant d'une dilatation thermique différentielle entre le cadre 6 et le bâti 1.

La structure de découplage 7 comprend un bloc 13 solidaire du bâti 1 et relié par une liaison 12 à un seul côté du cadre 6, la liaison étant agencée pour que le cadre s'étende en porte-à-faux par rapport au bâti 1.

Le dispositif est agencé de telle manière que l'ensemble constitué par des éléments 2, 3, 6, 7 soit dans des matériaux de même nature que l'élément sensible pour ne pas introduire de différence de dilatation entre l'élément sensible et la structure de découplage 7. L'élément sensible peut de ce fait être assemblé sur la structure de découplage 7 de manière totalement rigide.

Ce mode de découplage est plus précisément adapté à des éléments sensibles en silicium mais aussi en alliage de silicium (carbure de silicium, nitrure de silicium), en quartz (« silica fuse »), et en diamant. Cette structure reste facile à usiner par des méthodes mécaniques ou chimiques par voie humide ou sèche.

Les déflexions liées au découplage sont localisées dans une partie très affinée de la liaison 12 à proximité de l'ensemble 2, 3, 6, 7 qui est comparativement infiniment rigide en cyclage thermique et/ou en vibrations.

A épaisseur et longueur donnée (L) de la liaison 12 (la longueur L est mesurée le long de la liaison 12 entre le bloc 13 et le cadre 6), l'efficacité du découplage (déformation acceptable de l'ensemble des éléments 3, 6 vis à vis de la performance du capteur) dépend du rapport d2/d1 et d3/d1 où : d'1 est l'épaisseur minimale de la liaison 12 (zone la plus flexible), d2 est l'épaisseur maximale de la liaison 12 à l'endroit de son raccordement au bloc 7 et d3 est l'épaisseur du cadre 6. Dans tous les cas, ces rapports sont de préférence compris entre 10 et 100 de manière que l'effort restant appliqué à l'élément sensible malgré la déformation de la liaison 12 soit acceptable au regard des performances attendues. Le fait d'augmenter la longueur ou de diminuer l'épaisseur de la liaison 12 permet d'améliorer encore l'efficacité du découplage.

L'élément sensible peut comprendre une membrane sensible à la pression et une cavité arrière pour enfermer une pression de référence qui peut être le vide.

Dans ce cas, les moyens de détermination, connus en eux-mêmes, comprennent des jauges de contrainte fixées à la membrane 3 pour en mesurer la déformation. Les jauges de contrainte sont reliées à une unité de commande, non représentée ici, par des fils ayant une longueur et une souplesse suffisantes pour ne pas entraver les mouvements du cadre 6.

Bien entendu, l'invention n'est pas limitée aux modes de réalisation décrits mais englobe toute variante entrant dans le champ de l'invention telle que définie par les revendications.

En particulier, le dispositif peut avoir d'autres formes que celle décrite. La membrane peut par exemple avoir une forme circulaire.

## Revendications

1. Dispositif de détection de pression comprenant un bâti (1) sur lequel est fixé un capteur de pression (2) comprenant une membrane (3) qui a une surface destinée à être soumise à un fluide sous pression et qui est agencée pour se déformer élastiquement en fonction de la pression, et des moyens de détermination de la déformation de la membrane selon un axe normal (5) à un plan moyen de la membrane (3) au repos, **caractérisé en ce que** la membrane (3) est portée par un cadre (6) relié au bâti (1) par une structure de découplage mécanique pour isoler la membrane (3) de contrainte résultant d'une dilatation thermique différentielle entre le cadre (6) et le bâti (1), la membrane (3) et le cadre (6) étant dans un même matériau et dans lequel la structure de découplage comporte une liaison du cadre (6) au bâti (1) sur un seul côté, la liaison étant agencée pour que le cadre (6) s'étende en porte-à-faux par rapport au bâti (1) .

## Patentansprüche

1. Druckerfassungsvorrichtung, umfassend ein Gestell (1), an dem ein Drucksensor (2) befestigt ist, der eine Membran (3) umfasst, die eine Oberfläche (4) hat, die dazu bestimmt ist, einem Druckfluid ausgesetzt zu werden, und die ausgebildet ist, um sich in Abhängigkeit von dem Druck elastisch zu verformen, und Mittel zur Bestimmung der Verformung der Membran (3) entlang einer Achse (5), die senkrecht zu einer mittleren Ebene der Membran (3) in Ruhestellung ist, **dadurch gekennzeichnet, dass** die Membran (3) von einem Rahmen (6) getragen wird, der mit dem Gestell über eine mechanische Entkopplungsstruktur verbunden ist, um die Membran (3) von einer Belastung zu isolieren, die aus einer differentiellen Wärmeausdehnung zwischen dem Rahmen (6) und dem Gestell (1) resultiert, wobei die Membran (3) und der Rahmen (6) aus einem selben Material sind, und bei der die Entkopplungsstruktur eine Verbindung des Rahmens (6) mit dem Gestell (1) auf nur einer Seite umfasst, wobei die Verbindung derart ausgebildet ist, dass sich der Rahmen (6) relativ zum Gestell (1) auskragend erstreckt.

## Claims

1. A pressure detection device comprising a mount (1) whereon a pressure sensor (2) is attached which comprises a membrane (3) which has a surface intended to be subjected to a pressurized fluid and which is so arranged as to elastically deform according to pressure, and means for determining the deformation of the membrane along an axis normal (5) to a mid-plane of the membrane (3) at rest, **characterized in that** the membrane (3) is supported by a frame (6) connected to the mount (1) by a mechanical decoupling structure in order to isolate the membrane (3) from stress resulting from a differential thermal expansion between the frame (6) and the mount (1), with the membrane (3) and the frame (6) being made of the same material and wherein the decoupling structure comprises a connection of the frame (6) with the mount (1) on one side only, with the connection being so arranged that the frame(6) extends in a cantilevered position relative to the mount (1).
